# EUROPEAN PATENT APPLICATION

(11) **EP 2 590 439 A1**
(43) Date of publication of application: **08.05.2013**
(21) Application number: 11306440.6
(22) Date of filing: 07.11.2011
(51) Int. Cl.: H04W 4/06

(54) **Apparatus, Method and Computer Program for Providing Multicast Service Information to a Mobile Terminal**

(71) Applicant: Alcatel Lucent, 75007 Paris (FR)
(72) Inventor: Worrall, Chandrika, Newbury, Berkshire RG14 6SN (GB); Palat, Sudeep, Swindon, Wiltshire, SN5 6EE (GB)
(74) Representative: 2SPL Patentanwälte

(57) **Abstract**

Embodiments provide an apparatus (20) for providing information related to a multicast service to a mobile terminal (13) of a cellular communication system (10), the apparatus (20) comprising means (21) for determining information (22) indicative of a deviation between a predetermined association (23) between a frequency carrier and the multicast service and a current association (24) between the frequency carrier and the multicast service; and means (25) for communicating the determined information (22) indicative of the deviation to the mobile terminal (13) using a cell broadcast message

## Description

Embodiments of the present invention relate to wireless communications, more particularly but not exclusively to the provision of multicast services in a communication network.

### Background

Demands for higher data rates for mobile services are steadily increasing. At the same time modern mobile communication systems, as 3rd Generation (3G) systems and 4th Generation (4G) systems, provide enhanced technologies, which enable higher spectral efficiencies and allow for higher data rates and cell capacities. Moreover, new services and service types are introduced.

Broadcast and/or multicast services may be utilized, for example, for provision of multimedia services as well as for video and TeleVision (TV) applications. Thereby, broadcast services are point-to-multipoint (p-t-m) services where transmitted data is readable by any destination. For example, all mobile terminals associated to a wireless network may access a broadcast service. Examples of broadcast services are services which do not require any registration and are available to all terminals, as, for example, the Global Positioning System (GPS). In contrast, unicast services are point-to-point (p-t-p) services which provide transmission of data and messages towards a single destination, for example, a particular mobile terminal associated to the wireless communication system or network. Examples of unicast services are voice calls, emails, internet sessions, etc. Multicast services are point-to-multipoint services somewhere in between unicast and broadcast services. Here, only a limited group of destination terminals is addressed the same data and messages. Examples of multicast are TV streaming based on prior registration at a specific service provider.

In the context of the present specification the term "multicast" will be used for multicast services as well as broadcast services or combinations thereof, i.e. point-to-multipoint services. Hence, a multicast service may also be understood as a service which is cast or provided to multiple users of a communication system or their respective mobile terminals. One prominent multicast service is the Multimedia Broadcast Multicast Service (MBMS) or enhanced Multimedia Broadcast Multicast Service (eMBMS), as standardized by the 3^{rd} Generation Partnership Project (3GPP) for 3G and 4G mobile communication systems. MBMS or eMBMS is a point-to-multipoint interface specification, which is designed to provide efficient delivery of broadcast and/or multicast services, both within a radio cell as well as within a core network of a mobile communication system.

MBMS provisioning is designed for the Universal Mobile Telecommunications System (UMTS) and for the Long Term Evolution (LTE) system such that MBMS or multicast data traffic and unicast data traffic can be time multiplexed on the same frequency carrier, which is to be understood as a carrier or center frequency of a contiguous system frequency band, wherein a large number of closely spaced orthogonal sub-carriers may be used to carry data, for example.

For example, in a transmission structure of repetitive radio frames, MBMS/multicast data can be provided on some allocated or associated sub-frames or time slots while unicast service data can be scheduled on the remaining sub-frames or time slots of a radio frame. Unicast and broadcast/multicast services may each be associated with a bearer specifying the corresponding configuration and/or radio resource of the physical layer (PHY) and Layer 2 (L2) in order to fulfill certain Quality of Service (QoS) requirements for the different services. The bearers are mapped onto physical carriers. One physical carrier may support several multiplexed bearers. For example, different bearers may be mapped on some disjoint sub-frames within a radio frame. For example, out of 10 sub-frames, subframes #0, #4, #5, #9 may be allocated to unicast services, while sub-frames #1, #2, #3, #6, #7, #8 are allocated to multicast services.

For MBMS transmission across multiple radio cells, 3GPP defines MBMS transmission via Single-Frequency Network (SFN) configurations, wherein several transmitters, i.e. base stations (also referred to as eNodeBs), simultaneously send the same signal over the same frequency channel. The MBMS transmission over single-frequency configurations is also denoted as Multicast-Broadcast Single Frequency Network (MBSFN) according to 3GPP. Target applications include mobile TV and radio broadcasting, as well as file delivery and emergency alerts.

In a SFN technology, all the base stations transmit the same signal at the same time and over the same frequency channel to mobile terminals, also referred to as User Equipments (UEs) in the 3GPP specifications. Therefore, the base stations are required to be tightly time-synchronized. In this case, the transmissions received from multiple cells will, as seen from a mobile terminal, appear as a single transmission subject to severe multi-path propagation. Thus, it may overcome some shortcomings of single-cell broadcast by transforming destructive interferences (i.e., ISI) to constructive interferences. In this process, the received signals from different cells may be combined at the mobile terminal. Hence, in MBSFN, the transmission happens from a time-synchronized set of eNodeBs using the same resource block. This enables over-the-air combining, thus improving the Signal-to-Interference plus Noise-Ratio (SINR) significantly compared to non-SFN operation. The Cyclic Prefix (CP) used for MBSFN is slightly longer, and this enables the UE to combine transmissions from different eNodeBs.

According to 3GPP specifications, a service announcement may be used to distribute to users information about a particular MBMS service, parameters required for service activation (e.g. IP multicast addresses) and possibly other service related parameters (e.g. service start time). The service announcement may be provided to a UE sometime before the MBMS service is due to start. This time period could be hours, days or even weeks depending on different service types.

In eMBMS, two logical channels are defined to support point-to-multipoint downlink transmission: Multicast Control Channel (MCCH) and Multicast Traffic Channel (MTCH). MCCH is utilized for transmitting control messages, i.e. control plane information, between the network and mobile terminals (UEs) in RRC Connected or Idle Mode, while the MTCH is utilized for transmitting user plane information, i.e. session data of an MBMS service, between network and UEs in RRC Connected or Idle Mode. Both MCCH and MTCH are mapped to a transmission channel called Multicast Channel (MCH). Further, the MBMS point-to-multipoint Scheduling Channel (MSCH) is a logical channel which is used for a p-t-m downlink transmission of MBMS service transmission schedule between network and UEs in RRC Connected or Idle Mode.

In order to meet MBMS service continuity, a UE in RRC Idle Mode can autonomously prioritise a frequency cell which provides the multicast services the UE is interested in or receiving with the highest reselection priority for cell reselection. For this purpose the UE should get a neighbouring cell's multicast/MBMS service information in advance and use it in the cell reselection to decide which neighbouring cell is to be prioritized for cell reselection. Moreover, the same information could be used by UEs in RRC Connected Mode to find out multicast services delivered on neighbouring frequency carriers.

In a static multicast service configuration, the multicast/MBMS frequency carriers, MBSFN cell areas and radio resources per MBSFN may be configured via Operations, Administration, and Maintenance (OAM) tools and therefore can be made known at a Broadcast/Multicast Service Center (BM-SC) of the communication network. The BM-SC is a functional entity in charge of providing MBMS service to the end-user. For that purpose, the BM-SC serves as an entry point for content providers or any other broadcast/multicast source which is external to the network. Hence, the BM-SC serves as an MBMS data source. MBMS data may be scheduled in the BM-SC, e.g. for transmission to a user every hour. It offers interfaces over which content providers can request data delivery to users. The BM-SC may also authorize and charge content providers.

The so-called Multi-cell/multicast Coordination Entity (MCE) is a logical entity, responsible for allocation of time and frequency resources, i.e. radio resources, for multi-cell MBMS transmission. Hence, its functions are the allocation of the radio resources used by all eNodeBs in the MBSFN area for multi-cell MBMS transmissions using MBSFN operation. Besides allocation of the time/frequency radio resources this also includes deciding the further details of the radio configuration e.g. the modulation and coding scheme. The MCE actually does the scheduling on the radio interface. The MCE is a logical node which may be integrated as part of an eNodeB (in which case, the M2 interface becomes an internal eNodeB interface), for example.

The static multicast service configuration is required at least for distributed MCE architecture. Said static configuration assumes no counting is performed at the MCE, hence, if a MBMS service is scheduled for transmission, it will always be mapped to the configured MBSFN area (frequency) for the transmission. Thereby, "counting" denotes determining how many interested users there are for a given MBMS service. The frequency carrier for transmitting the service is OAM configured, i.e. predetermined, and known at the time of service announcement (e.g. service guide formatting). Therefore, in the static multicast service configuration, the MBMS frequency carrier information can be delivered over the service announcement (e.g. service guide) together with other information.

However, the provision of MBMS frequency-service information via service announcement (hence service/application layer) does not support a dynamic, flexible MBSM radio resource scheduling. In a dynamic, flexible radio resource scheduling, the MCE performs counting to find out the popularity of a given MBMS service. Based on the counting results, the MCE may decide to not to transmit a previously announced multicast service via MBSFN (i.e., not to broadcast the pre-announced service in the MBSFN area). Additionally, the MCE may perform admission control and retention of MBMS services such that allocated radio resources for MBMS are used efficiently.

The dynamic changes due to the MCE's flexible resource scheduling may not be communicated to a mobile terminal via application/service layer (i.e., service announcement) since there is no signalling to communicate the MCE decision to a core network node or application/service layer according to the current MBMS architecture.

Hence, it is desirable to provide additional MBMS frequency-service information to MBMS users when the aforementioned dynamic resource scheduling is used after having (pre-)determined certain associations between frequency carriers and multicast services before, e.g. by service announcement.

One possible method to provide dynamic MBMS frequency-service information to UEs would be to transmit the frequency-service information to a UE over radio interface using RRC signalling. After a MBMS related decision has been made by the MCE, a list of MBMS frequency carriers and MBMS services per frequency carrier could be transmitted to UEs over the radio interface. Hence, all the on-going MBMS services and the services about to be started over MBSFN would be signalled to the UE. However, this mechanism has a number of disadvantages:
First, the amount of information to be signalled over the radio interface is high. Note that all the on-going MBMS services and the MBMS services about to start on any inter-frequency carrier would have to be signalled over the radio. Additionally, MBMS service information would have to be provided to the corresponding base stations over X2 or M2 interfaces by the MCE. This would also create significant network signalling.
Second, the information to be signalled changes every time a MBMS session ends, starts, and whenever counting decision is made by the MCE. Considering the possibility of multiple MBMS frequency carriers, the dynamicity of information change could be very high resulting very frequent updates to the MBMS frequency-service information transmitted over the radio.
Third, due to the high frequency information update, a UE would also be required to acquire the frequent updates of the information. This may negatively influence the UE battery consumption due to the requirement for frequency reading of the frequency-service information.

### Summary

Embodiments of the present invention are based on the finding that it is desirable to provide multicast frequency-service update information to multicast users only with a minimum amount of network signalling related to the multicast frequency-service updates due to an MCE's flexible resource scheduling.

It is a further finding that a frequency carrier with which a multicast service, as, e.g. a MBMS service, may be provided to users could already be decided at a frequency planning stage for mostly popular services, as, e.g. nation-wide services. If the multicast frequency carrier information is available at the time of multicast or MBMS service announcement, said information may be provided over the application / service layer in a static or semi-static manner, i.e. leading to the aforementioned static multicast service configuration. In this case an announced association between a frequency carrier and the multicast service, or vice versa, may be regarded as a predetermined or preannounced association which may be provided over the application / service layer. The multicast frequency carrier information or the predetermined association between the frequency carrier and the multicast service provided over the application / service layer may only be provided or updated in relatively large time intervals, which means that an update frequency of multicast frequency carrier information provided over the application / service layer is relatively low.

It is a further finding that, if a previously announced association or relationship between a frequency carrier and a multicast service, the multicast service is then not transmitted via MBSFN using said frequency carrier due to an updated current (i.e. present) association or relationship between the frequency carrier and the multicast service, which may be due to a decision made by an MCE based on counting and/or admission control and/or any other reason, information indicative of a deviation from the previously announced association between the frequency carrier and the multicast service may be provided to a mobile terminal or UE via a cell broadcast RRC message.

According to different aspects of the present invention various apparatuses and methods related to different network components, respectively, are provided.

According to a first aspect it is provided an apparatus for providing information related to a multicast service to a mobile terminal of a cellular communication system. The apparatus comprises means for determining information indicative of a deviation between a (previously) predetermined association between a frequency carrier and the multicast service and a current or actual association between the frequency carrier and the multicast service. Further, the apparatus comprises means for communicating the determined information indicative of the deviation to the mobile terminal using a cell broadcast message.

The apparatus may be associated to one or more network entities of the cellular communication system or network. For example, it may be associated to a Multi-cell/multicast Coordination Entity (MCE) of said network and/or a base station thereof. Thereby, a base station may be understood as a wireless interface of a wired network, which enables transmission of radio signals to a User Equipment or mobile terminal. Such radio signal may comply with radio signals as, for example, standardized by the 3^{rd} Generation Partnership Project (3GPP) or, generally, in line with the above listed systems. Thus, a base station may correspond to a NodeB, an eNodeB, an access point, etc.

According to some embodiments the multicast service may be a Multimedia Broadcast Multicast Service (MBMS) or an enhanced Multimedia Broadcast Multicast Service (eMBMS), as standardized by the 3^{rd} Generation Partnership Project (3GPP) for 3G and 4G mobile communication systems. Hence, the multicast service may be delivered to users or their mobile terminals via a single-cell broadcast technology or a Single Frequency Network (SFN) or multi-cell broadcast technology, as e.g. MBSFN.

According to various embodiments the cellular communication system may, for example, correspond to one of the mobile communication systems standardized by the 3rd Generation Partnership Project (3GPP), as Universal Terrestrial Radio Access Network (UTRAN) or Evolved UTRAN (E-UTRAN), e.g. Universal Mobile Telecommunication System (UMTS), a Global System for Mobile Communication (GSM) or Enhanced Data Rates for GSM Evolution (EDGE) network, a GSM/EDGE Radio Access Network (GERAN), Long-term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Code Division Multiple Access (CDMA), Orthogonal Frequency Division Multiple Access (OFDMA), Frequency Division Multiple Access (FDMA), Time Division Multiple Access (TDMA), etc. In the following the terms mobile communication system and mobile communication network are used interchangeably.

The term frequency carrier is to be understood as center frequency of a contiguous transmission frequency band used for transmitting a multicast service, such as MBMS, for example. A frequency carrier or the corresponding contiguous transmission frequency band comprises a limited set of radio resources, which may be understood as a plurality of radio resources, which is associated to one particular frequency carrier or to one contiguous frequency band associated to one frequency carrier. In LTE, for example, the limited set of radio resources may be regarded as radio resource blocks associated to a contiguous frequency band of 5, 10, 15, or 20 MHz, for example.

Moreover, the term radio resources may be understood as an element or a combination of elements of the group of a frequency resource, a bandwidth, a carrier, a sub-carrier, a time resource, a radio frame, a time slot, a symbol, a sub-frame, a Time Transmission Interval (TTI), a code resource, an Analog Spectrum Modulation (ASM) symbol, a Digital Spectrum Modulation (DSM) symbol, a Frequency Shift Keying (FSK) symbol, a Phase Shift Keying (PSK) symbol, a Pulse Code Modulation (PCM) symbol, a Quaternary Amplitude Modulation (QAM) symbol, a Frequency Hopping Spread Spectrum (FHSS) sequence, a Direct Sequence Spread Spectrum (DSSS) sequence, etc. In embodiments the plurality of radio resources may thus correspond to one of or a combination of the group of time resources, frequency resources, coding resources or transmission techniques. For example, a Data Radio Bearer (DRBs) also comprises a combination of physical radio resources and, hence, may be regarded as a radio resource itself.

A cell broadcast message may be understood as a message which is simultaneously delivered to multiple users in a specified geographical area, i.e. the radio cell, which is served by a serving base station. In embodiments supporting 3G and 4G mobile communication systems, a logical channel known as Broadcast Control Channel (BCCH) may be mapped to transport channels known as Broadcast Channel (BCH) or Forward Access Channel (FACH) in order to carry cell broadcast messages from the communication system towards its associated users.

According to 3GPP specifications, a service announcement may be used to distribute to users information about a particular multicast service, parameters required for service activation (e.g. IP multicast addresses) and other service related parameters, as, e.g. service start time and its associated frequency carrier. That is to say, the service announcement may be used to provide the predetermined association (or relationship) between a frequency carrier and an associated multicast service, planned to be broadcasted over said frequency carrier to a mobile terminal. The service announcement may be provided to a mobile terminal some time before the multicast service is due to start via the application/service layer of the Open Systems Interconnection (OSI) model. This time period could be hours, days or even weeks, depending on different service types.

However, the provision of the predetermined frequency-carrier-multicast-service association via service announcement (hence service/application layer) does not take a subsequent dynamic-flexible multicast radio resource scheduling into account, which may be performed by a MCE in order to get a current or actual association (or relationship) between the frequency carrier and the multicast service, wherein the actual association may deviate from the previously announced predetermined association. For example, the MCE may perform counting to find out the popularity of a given MBMS service. Based on the counting results, the MCE may decide to not to transmit the multicast service via the predetermined frequency carrier and/or not to broadcast the preannounced multicast service in the MBSFN area at all. Additionally, the MCE may perform admission control and retention of MBMS services such that allocated radio resources for multicast are to be used efficiently. Therefore, the current association between the frequency carrier and the multicast service may be based on a current dynamic allocation of radio resources related to the multicast service, wherein the current allocation is performed by a MCE of the cellular communication system.

Hence, the predetermined or planned association between the frequency carrier and the multicast service has been provided to the mobile terminal, e.g. via the application/service layer, before the subsequent deviation of the current association from said predetermined association due to dynamic-flexible multicast radio resource scheduling of the MCE takes place. Since an update time interval for providing and/or updating the predetermined frequency-carrier-multicast-service association to the mobile terminal via the application/service layer is larger than radio resource scheduling intervals of the MCE, an update time interval for providing the current frequency-carrier-multicast-service association between the frequency carrier and the multicast service to the mobile terminal may be chosen to correspond to radio resource scheduling intervals of the MCE. Hence, the update time interval for providing and/or for updating the predetermined association to the mobile terminal is larger than the update time interval for providing the current association. In other words, the update time interval for providing the current association is smaller than the update time interval for providing and/or for updating the predetermined association, which leads to more up-to-date settings of the mobile terminals.

If a particular multicast service is not transmitted via MBSFN due to a decision made by the MCE based on counting and/or admission control or any other reason, information of said particular multicast service which is not provided over MB SFN may be provided to the mobile terminal by means of a cell broadcast RRC message. Hence, according to some embodiments, the means for determining the association deviation may be operable to determine information on a multicast service which has previously been associated to a frequency carrier of the communication system to obtain the predetermined association, and wherein the multicast service is presently associated to a different or no frequency carrier resulting in the current association between the frequency carrier and the multicast service.

Additionally or alternatively, if a particular multicast service is not pre-allocated a frequency at the time of service announcement (e.g. via the application/service layer), the frequency carrier information for the multicast service may also be provided to the multicast interested mobile terminals using the cell broadcast message. Hence, the means for determining the deviation may be operable to determine information on a multicast service, which has, according to the predetermined association, previously (e.g. during service announcement) not been associated to any frequency carrier of the communication system, and which is presently associated to a frequency carrier resulting in the current frequency-carrier-multicast-service association.

According to another aspect, the same multicast service may be delivered over different frequencies at different parts of the wireless network or the Public Land Mobile Network (PLMN). Hence, more than one frequency carrier may be associated with the same multicast service according to the information communicated over service announcement, which is the predetermined or planned association between the multicast service and the different frequency carriers. In such a case, the mobile terminal may not know the frequency carrier over which the multicast service is transmitted in a certain geographical region. Therefore the MCE could provide the accurate multicast frequency information, hence the accurate frequency carrier for the multicast service, which has been associated with more than one frequency carrier, using the same cell broadcast RRC message. That is to say, according to some embodiments of the present invention, the predetermined association between the frequency carrier and the multicast service may comprise a plurality of frequency carriers associated to said multicast service, each of the plurality of frequencies carriers corresponding to a different geographical area covered by the communication system, and wherein the current frequency-carrier-multicast-service association is indicative of one of the plurality of frequencies corresponding to a current geographic location of the mobile terminal.

According to some embodiments, the means for communicating the determined information may be operable to communicate the information by means of a System Information Block (SIB), wherein the SIB may be transmitted by means of a broadcast channel (BCH) of the cellular communication system. SIBs are broadcasted by the cellular communication system and may inform associated mobile terminals about all important parameters of how to access the system or network and how to find neighboring cells, etc. A system information message, carried by the Broadcast Control Channel (BCCH), may be used to convey one or more System Information Blocks. All the SIBs included may be transmitted with the same periodicity. For some embodiments of the present invention a completely new SIB may be defined for transporting the determined information indicating a present deviation of current system parameters related to multicast services from previously signaled system parameters. Also existing SIBs may be extended in order to cover the information indicating a current frequency-multicast-service association deviation from a previously signaled frequency-multicast-service association.

According to a further aspect of the present invention it is provided an apparatus for a mobile terminal of a cellular communication system offering multicast service to the mobile terminal or its user. The mobile terminal apparatus comprises means for receiving, via a cell broadcast message of the cellular communication system, information indicative of a deviation between a previously announced (i.e. predetermined) association between a frequency carrier and the multicast service and an actual (i.e. current) association between the frequency carrier and the multicast service.

The apparatus for the mobile terminal may be an apparatus which is directly or indirectly coupled to the mobile terminal. A mobile terminal may also be denoted as mobile transceiver or UE. According to some embodiments, the apparatus may be directly integrated into a mobile terminal by means of corresponding electronic circuitry and/or software components running on said electronic circuitry. A mobile terminal may be integrated in a mobile device, such as e.g. in a smartphone, a cell phone, a user equipment, a laptop, a notebook, a personal computer, a Personal Digital Assistant (PDA), an Universal Serial Bus (USB) -stick, a car, etc.

According to some embodiments, a mobile terminal may check whether frequency carrier information has previously been provided, i.e. predetermined, via application/service layer for the interested multicast (e.g. MBMS) service. For example, the service's session start time may normally be provided via the application/service layer (e.g. service guide). Then, at a time instant closer to the start time of the multicast session, the mobile terminal may check whether a cell broadcast RRC message is triggered. According to embodiments, the the means for receiving the information may hence be operable to trigger the reception of the cell broadcast message within a predetermined time interval prior to a previously communicated start time of the multicast service. The mobile terminal may then check the broadcast message to find out whether the multicast service is not transmitted via MBSFN due to a radio resource scheduling decision made by the MCE. If there is no new (i.e. more current) frequency carrier information related to the multicast service of interest, the mobile terminal may start to prioritize the corresponding predetermined multicast frequency carrier for the service of interest for cell reselection (if in RRC Idle Mode). In the meantime the mobile terminal may also monitor the BCH for any updates on the multicast frequency carrier information.

According to a further embodiment, the mobile terminal may receive information related to a multicast service of interest over the cell broadcast message indicating that the multicast service is not provided via MBSFN, possibly in contrast to a previous service announcement associating said multicast service with a particular frequency carrier. Upon reception of the information, a mobile terminal in RRC Idle Mode may apply 3GPP Release 8/9 cell reselection priority rules. For that purpose, the mobile terminal apparatus may further comprise means for selecting a cell reselection priority rule based on the received information indicative of the deviation. Thereby, the means for selecting the cell reselection priority rule may be operable to prioritize a radio cell which is operating at a frequency carrier being currently associated to the multicast service, if the received information indicates such an association, and, to prioritize a radio cell according to a precept or demand of the communication system. The latter prioritization mechanism corresponds to 3GPP Release 8/9 specifications, according to which the communication network prescribes which cell should be prioritized in which order for cell reselection. According to more recent 3GPP specification Releases a mobile terminal may decide to prioritize a radio cell offering its multicast service of interest.

Beside a communication system comprising apparatuses for core network components and mobile terminals according to embodiments of the present invention, it is also provided a method for providing information related to a multicast service to a mobile terminal of a cellular communication system. The method comprises a step of determining information indicative of a deviation between a predetermined association between a frequency carrier and the multicast service and a current association between the frequency carrier and the multicast service, and a step of communicating the determined information indicative of the deviation to the mobile terminal using a cell broadcast message.

Some embodiments also comprise a digital control circuit installed within an apparatus for performing the method. Such a digital control circuit, e.g. a digital signal processor (DSP), needs to be programmed accordingly. Hence, yet further embodiments also provide a computer program having a program code for performing embodiments of the method, when the computer program is executed on a computer or a digital processor.

Given that multicast frequency carrier information for most multicast services (e.g. popular multicast/MBMS services) are available at the time of service announcement, which is before delivering (casting) the multicast service to interested users, an amount of required signaling over the radio interface may greatly be reduced. Note also that popular multicast services do normally not require counting by the MCE.

As updates to the communicated cell broadcast information indicative of the deviation between a predetermined frequency-carrier-to-multicast-service association and a current frequency-carrier-to-multicast-service association are only required in case of an MCE decision to change a previous association between a given multicast service and its associated frequency carrier, e.g., not to transmit a multicast service over MBSFN, an amount and/or frequency of cell broadcast information updates may also be reduced.

Hence, embodiments of the present invention may provide benefits of reduced signaling and lower update frequency for the signaled deviation information. Hence embodiments of the present invention may also allow for better UE battery consumption. Also, less signaling between network nodes may be provided.

### Brief description of the Figures

Some other features or aspects will be described using the following non-limiting embodiments of apparatuses and/or methods and/or computer programs by way of example only, and with reference to the accompanying figures, in which
- Fig. 1: schematically illustrates a wireless communication system, wherein a predetermined association between a frequency carrier and a multicast service is provided to a mobile terminal via application/service layer service announcement;
- Fig. 2: shows a block diagram of an apparatus for providing information related to a multicast service to a mobile terminal, according to an embodiment of the present invention;

- Fig. 3: schematically illustrates a wireless communication system, wherein a current association between a frequency carrier and a multicast service is provided to a mobile terminal according to an embodiment of the present invention;
- Fig. 4: shows a block diagram of an apparatus for a mobile terminal, according to an embodiment of the present invention; and
- Fig. 5: schematically shows a flow chart of a method for providing information related to a multicast service to a mobile terminal, according to an embodiment of the present invention.

### Description of some Embodiments

Various example embodiments will now be described more fully with reference to the accompanying figures in which some example embodiments are illustrated. In the figures, the thicknesses of layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

The MBMS service ID is the unique identification of an MBMS service in the communication network. A UE or an eNodeB can distinguish the different MBMS service by its associated MBMS service IDs, respectively. What is required by the UE for MBMS service continuity purposes is, which MBMS service is provided over which frequency carrier. That is to say, a UE requires an association between a frequency carrier and a multicast service, or vice versa. Therefore, the corresponding frequency carrier for each MBMS service should be signalled to the UE.

Currently in each MBSFN area, i.e. a geographical area in which MBMS is provided via one predetermined frequency carrier, SIB2 and/or SIB 13 broadcast MBMS related essential configuration information, which may be used for MBMS Control Channel (MCCH) finding and decoding. Actual MBMS service provision information is transmitted to UEs via a MCCH message. A UE can find information related to its MBMS service of interest configuration after reading the MCCH message. All the MBMS service related information is transmitted in the corresponding MBSFN area. The cells without MBMS service do not transmit any MBMS related information.

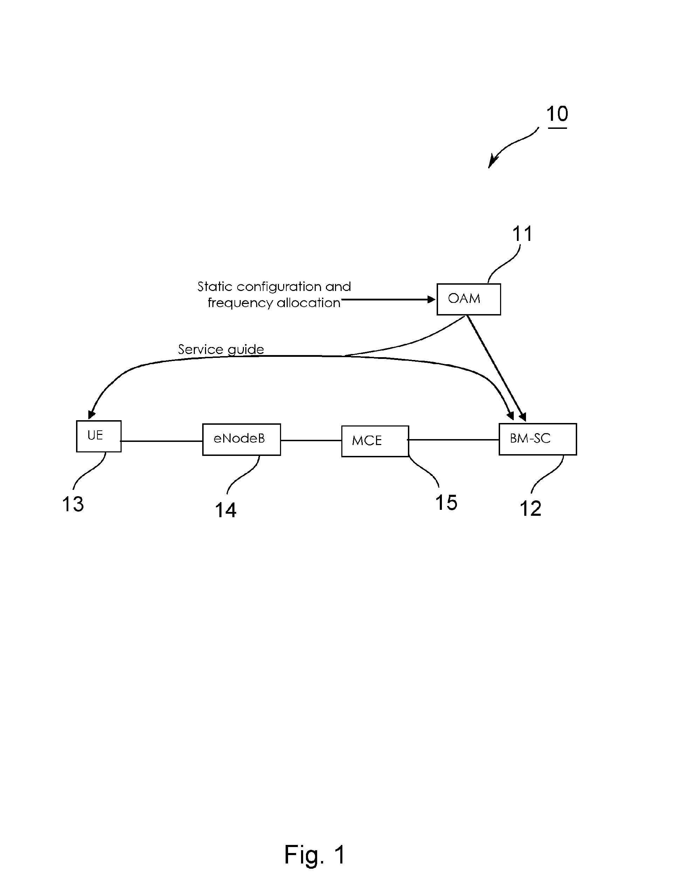

Fig.1 depicts how initial or predetermined MBMS frequency-carrier-to-MBMS-service association information is provided to MBMS interested users over the application/service layer.

The initial frequency carrier allocation is decided or predetermined at an OAM entity 11 of the communication system 10, hence, considering a static or semi-static configuration which is predetermined by the OAM entity 11. That is to say, the OAM entity 11 provides a predetermined association between a particular MBMS frequency carrier and a certain MBMS multicast service. The predetermined frequency-carrier-to-MBMS-service association is provided to a BM-SC (Broadcast/Multicast Service Centre) 12, where the service announcement is formatted. The formatted frequency-carrier-to-MBMS-service association is then provided to a user's UE 13 via application layer service announcement. Here, a base station 14 and/or a MCE 15 only serve for providing the application layer service announcement to the UE 13 by using physical layer radio resources and without any rearrangement of the predetermined frequency-carrier-to-MBMS-service association. On the other hand, the predetermined frequency-carrier-to-MBMS-service association could also be provided to the UE 13 via a MBMS service guide. In this case the MBMS service guide could be formatted outside of the BM-SC 12.

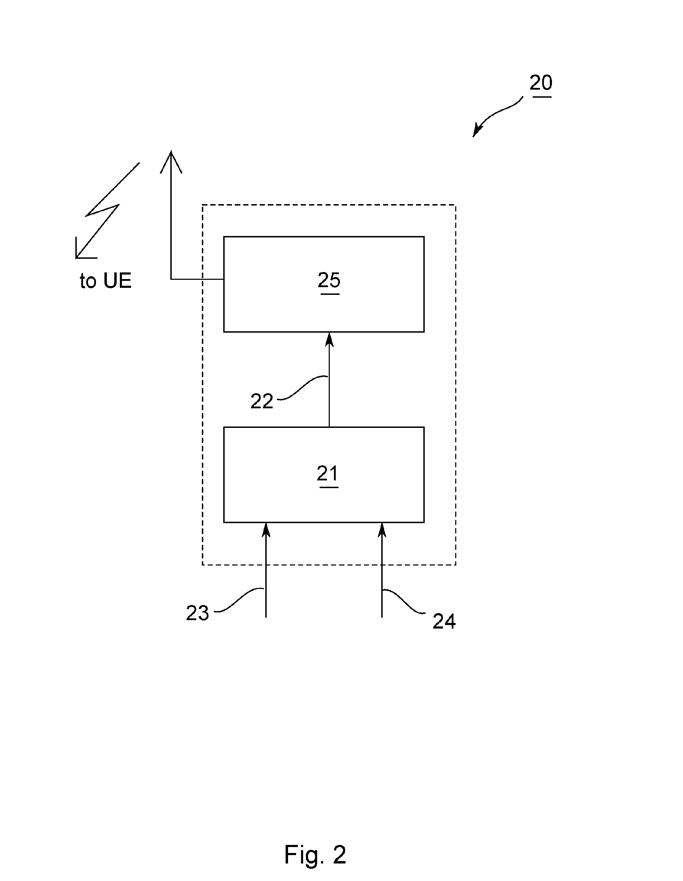

There are cases, where the initial or predetermined frequency-carrier-to-MBMS-service association, which has been provided to the UE 13 via application layer service announcement, changes after its initial provision, which has been described with reference to Fig. 1. Such a scenario is schematically illustrated in Fig. 2.

Such a change of the predetermined frequency-carrier-to-MBMS-service association may, for example, be due to dynamic-flexible MBSM radio resource scheduling, wherein the MCE 15 may, for example, perform counting to find out a popularity of a given MBMS service. Based on the counting results, the MCE 15 may then decide not to transmit an unpopular MBMS service via MBSFN, i.e., not to broadcast the unpopular service in the MBSFN area. Additionally, the MCE 15 may perform admission control and retention of MBMS services such that allocated radio resources for MBMS may be used efficiently. Hence, due to the MCE's dynamic radio resource scheduling the predetermined frequency-carrier-to-MBMS-service association may change into a different actual (i.e. current) frequency-carrier-to-MBMS-service association, which should be signaled to the UE 13 in the MB SFN area.

For that purpose, embodiments of the present invention provide an apparatus for providing information related to a multicast/MBMS service to a mobile terminal or UE 13 of a cellular communication system, which may be a LTE network, for example. Such an apparatus 20 is schematically illustrated in Fig. 2.

The apparatus 20 comprises means 21 for determining information 22 indicative of a deviation between a predetermined or previously planned association 23 between a frequency carrier and the multicast service (i.e. predetermined frequency-carrier-to-multicast-service association) and an actual or current 24 association between the frequency carrier and the multicast service (i.e. current frequency-carrier-to-multicast-service association). Further, the apparatus 20 comprises means 25 for communicating the determined information 22 indicative of the deviation to the mobile terminal 13 using a cell broadcast message, in particular a Radio Resource Control (RRC) cell broadcast message using a Broadcast Channel (BCH).

According to some embodiments the means 21 for determining the information 22 may be directly or indirectly coupled to an MCE 15. It may as well be integrated into an MCE. Likewise, the means 25 for communicating may be directly or indirectly coupled to an MCE 15. For example, the means 25 may be a base station or integrated into a base station, i.e., an eNodeB 14 coupled to MCE 15.

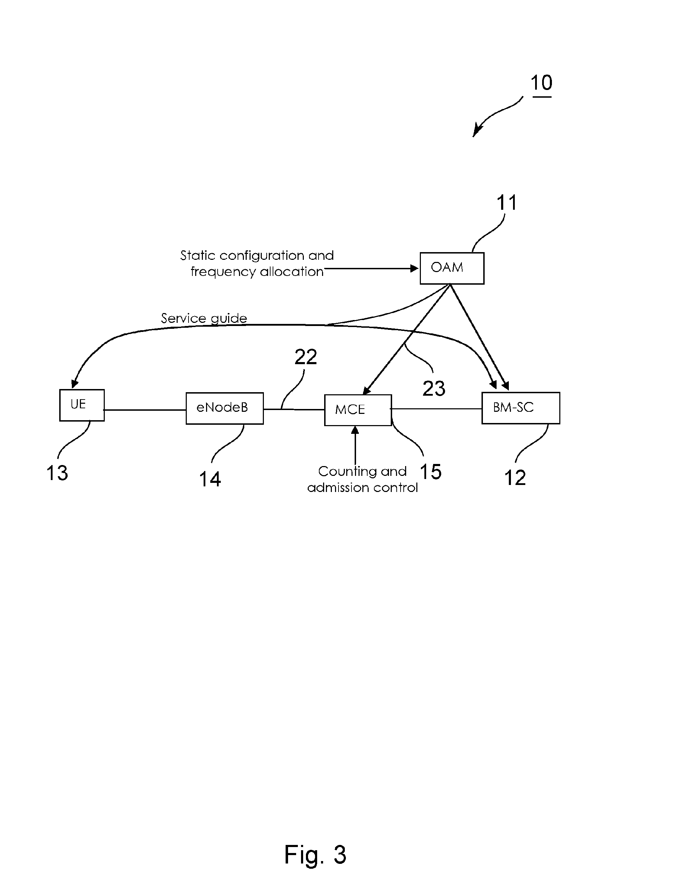

Fig. 3 exemplarily illustrates a scenario wherein the MCE 15 is functioning as means 21 for determining the deviation information 22 between the predetermined frequency-carrier-to- MBMS-service association 23, which as previously been announced to the UE 13 via application layer service announcement, and an actual or current frequency-carrier-to-MBMS-service association 24, which is due to the MCE's dynamic MBSM radio resource scheduling. Hence, Fig. 3 shows a scenario which involves dynamic resource allocation by the MCE 15.

For example, the MCE 15 may decide to not transmit a previously announced MBMS service via MBSFN due to counting, admission control or any other reason. That is to say, the current association 24 between the frequency carrier and the MBMS service is based on a current dynamic allocation of radio resources related to the multicast service performed by the MCE 15 of the wireless communication system. The MCE 15 may be informed by OAM 11 which frequency carrier has been assigned for a particular MBMS service. Hence, OAM 11 may provide the predetermined frequency-carrier-to-MBMS-service association 23 to the MCE 15. The MCE 15 may then determine the information 22 indicative of the deviation between the predetermined frequency-carrier-to-MBMS-service association 23 and the actual frequency-carrier-to-MBMS-service association 24 due to the MCE's scheduling decision. Further, the MCE 15 may provide the eNodeBs 14 with information 22 about the association deviation or the association change. For example, the MCE 15 may provide the eNodeBs 14 with information about those MBMS services which are not going to be transmitted via MBSFN. Hence, the means 21 (i.e. the MCE 15) for determining the deviation information 22 is operable, based on the predetermined and the current frequency-carrier-to-MBMS-service associations 23, 24, to determine information on a multicast service which has previously been associated to a frequency carrier of the communication system, and which is presently associated to a different or no frequency carrier resulting. The eNodeB 14 may then transmit this deviation information 22 over the air interface using a cell broadcast RRC message.

There may as well be scenarios, where a transmission frequency is not initially allocated to a particular MBMS service via service announcement. Instead, the MCE 15 (dynamically) decides at which frequency carrier to transmit the MBMS service, based on the available MBMS radio resources. The new information at which frequency carrier to transmit the MBMS service could also be provided to the UE 13 using the same cell broadcast RRC message. Here, the new assignment of a frequency carrier to the MBMS service may be regarded as a deviation from the original (predetermined) frequency-carrier-to-MBMS-service association, wherein the predetermined frequency-carrier-to-MBMS-service association did not comprise the allocation of the frequency carrier to the MBMS service. Hence, the means 21 for determining the deviation information 22 may be operable to determine information on a multicast service which has previously not been associated or allocated to any frequency carrier of the communication system according to the predetermined association, however, which is presently associated to a frequency carrier according to the current association.

According to a further aspect, the MBMS same service may be delivered over different frequency carriers in different parts of the PLMN. Hence, more than one frequency carrier may initially be associated with the same MBMS service according to the initial or predetermined frequency-carrier-to-MBMS-service association communicated to the UEs 13 over service announcement. I.e., the predetermined association between a frequency carrier and a multicast service may comprise a plurality of frequency carriers associated to the multicast service, the each of the plurality of frequency carriers corresponding to a different geographical area covered by the communication system. In such a case, a UE 13 may not be aware of the frequency carrier with which the MBMS service is transmitted in a given geographical region. As the MCE's current frequency-carrier-to-MBMS-service association is indicative of one of the plurality of frequency corresponding to a current geographic location of the mobile terminal, the MCE 15 could hence provide the accurate MBMS frequency information for the MBMS service, which has initially been associated with more than one frequency carriers using the same cell broadcast RRC message over the BCH or FACH.

Note that the MCE's dynamic radio resource scheduling decision may be made after or close to the start of a MBMS session, hence the information 22 is provided over the RRC broadcast message in a timely manner.

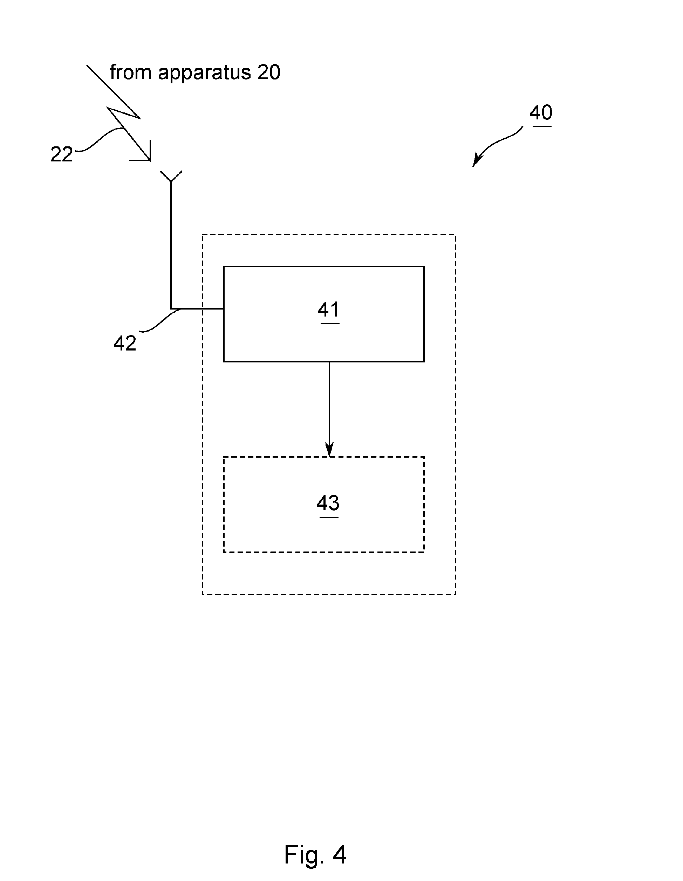

As a counterpart to apparatus 20 embodiments of the present invention also provide an apparatus 40 for a mobile terminal 13, which is schematically shown in Fig. 4.

The apparatus 40 comprises means 41 for receiving, via the cell broadcast message from the apparatus 20, the information 22 indicative of a deviation between the predetermined association 23 between a frequency carrier and the multicast service and the current association 24 between the frequency carrier and the multicast service.

Here, means 41 may comprise analog and/or digital electrical receiver circuitry, as, e.g., one or more antenna devices 42 and, downstream thereto, a mixed signal RF (Radio Frequency) front end for converting a received RF signal into the digital baseband domain.

According to an embodiment, a mobile terminal or UE 13 may check or determine whether any frequency carrier related information is provided over application/service layer for the MBMS service of interest. For this purpose, the UE 13 may e.g. consult an application specific memory storing the initial or predetermined frequency-carrier-to-MBMS-service association 23. The MBMS session start time is normally provided over the application/service layer (service guide). At a time closer to the start time of the MBMS session, the UE 13 may trigger a check for a RRC cell broadcast message. Hence, the means 41 for receiving the information 22 may operable to trigger the reception of the cell broadcast message within a predetermined time interval prior to a previously communicated start time of the multicast service. Thereby, the UE 13 may check the broadcast message to find out whether the MBMS service is or is not transmitted via MB SFN due to a dynamic resource scheduling decision made by the MCE 15. If there is no information related to the MBMS service of interest, the UE 13 may start prioritising the corresponding frequency carrier of the MBMS service of interest for cell reselection (if in idle mode). In the meantime the UE 13 may monitor BCH or FACH for any notifications on the update of MBMS frequency carrier information. For that purpose, the apparatus 40 may further comprise means 43 for selecting a cell reselection priority rule based on the received information 22 indicative of the frequency-carrier-to-MBMS-service association deviation.

In case an Idle Mode UE 13 receives information 22 with regard to the MBMS service of interest over the cell broadcast message, wherein the information 22 indicates that the MBMS service is not provided via MBSFN, the idle mode UE may apply 3GPP Release 8/9 cell reselection priority rules upon reception of the information 22. That is to say, the means 43 for selecting a cell reselection priority rule may be operable to prioritize a radio cell according to the precept or demand of the communication system. However, in case the information 22 indicates that the MBMS service is provided via MBSFN (possible at a current frequency carrier differing from the predetermined or initial configuration), the means 43 may prioritize a radio cell which is operating at the frequency carrier being currently associated to the multicast service, i.e., if the received information indicates such association.

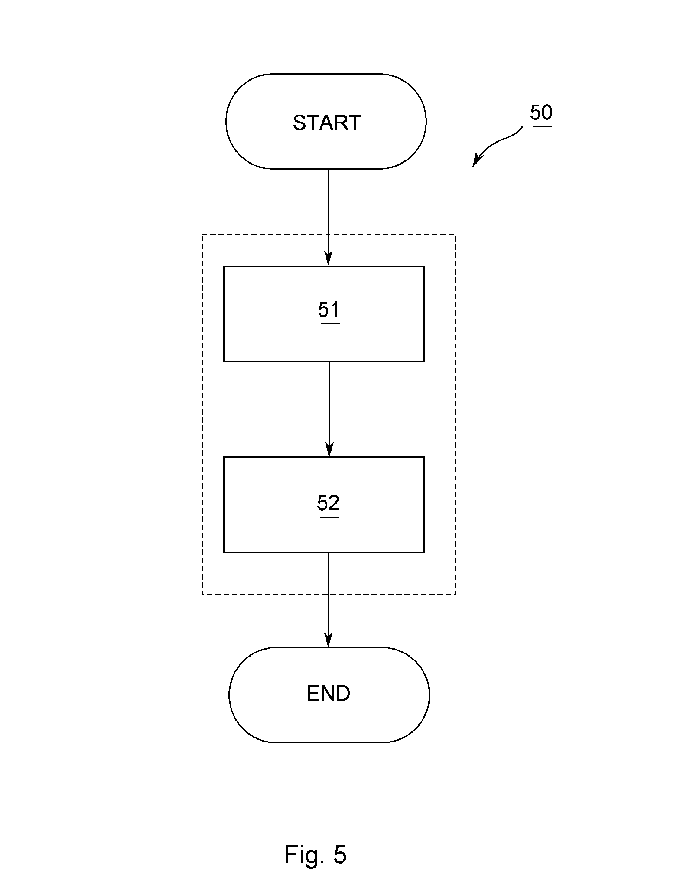

To summarize and turning to Fig. 5, it is illustrated a method 50 for providing information related to a multicast service to a mobile terminal 13.

The method 50 comprises a first step 51 of determining information 22 indicative of a deviation between a predetermined association 23 between a frequency carrier and the multicast service and a current association 24 between the frequency carrier and the multicast service. The step 51 may, for example, be executed by a MCE 15 of the communication system. Further, the method 50 comprises a step 52 of communicating the determined information 22 indicative of the deviation to the mobile terminal 13 using a RRC cell broadcast message. This step 52 may, for example, be executed by the MCE 15 in cooperation with a base station 14 which is coupled to the MCE 15.

A person of skill in the art would readily recognize that steps of the above-described method can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

To summarize, some embodiments of the present invention provide a concept for providing information regarding a decision made by a MCE based on dynamic resource scheduling of multicast/MBSM service to mobile terminals. Hence, embodiments may support for flexible resource scheduling for MBMS.

The description and figures merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for determining", "means for communicating", etc., may be provided through the use of dedicated hardware, such as "a processor", "a controller ", "a DSP", "a communicator", "a transmitter", "a receiver", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons.

Furthermore, in some embodiments a single step may include or may be broken into multiple sub-steps. Such sub-steps may be included and part of the disclosure of this single step unless explicitly excluded.

## Claims

1. An apparatus (20) for providing information related to a multicast service to a mobile terminal (13) of a cellular communication system (10), the apparatus (20) comprising:
means (21) for determining information (22) indicative of a deviation between a predetermined association (23) between a frequency carrier and the multicast service and a current association (24) between the frequency carrier and the multicast service; and
means (25) for communicating the determined information (22) indicative of the deviation to the mobile terminal (13) using a cell broadcast message.

2. The apparatus (20) of claim 1, wherein the predetermined association (23) between the frequency carrier and the multicast service has been provided to the mobile terminal (13) before the deviation of the current association from said predetermined association.

3. The apparatus (20) of claim 1, wherein an update time interval for providing and/or updating the predetermined association (23) to the mobile terminal (13) is larger than an update time interval for providing the current association (24).

4. The apparatus (20) of claim 1, wherein the predetermined association (23) between the frequency carrier and the multicast service has been provided to the mobile terminal (13) via the application layer of the Open Systems Interconnection (OSI) model before the information (22) indicative of the deviation is communicated to the mobile terminal (13).

5. The apparatus (20) of claim 1, wherein the current association (24) between the frequency carrier and the multicast service is based on a current dynamic allocation of radio resources related to the multicast service, wherein the allocation is performed by a Multi-cell/multicast Coordination Entity (15) of the communication system (10).

6. The apparatus (20) of claim 1, wherein the means (21) for determining the information (22) indicative of the deviation is operable to determine information on a multicast service which has previously been associated to a frequency carrier of the communication system according to the predetermined association (23), and which is presently associated to a different or no frequency carrier according to the current association (24).

7. The apparatus (20) of claim 1, wherein the means (21) for determining the information (22) indicative of the deviation is operable to determine information on a multicast service which has previously not been associated to any frequency carrier of the communication system according to the predetermined association, and which is presently associated to a frequency carrier according to the current association (24).

8. The apparatus (20) of claim 1, wherein the predetermined association (23) between the frequency carrier and the multicast service comprises a plurality of frequency carriers associated to said multicast service, the each of the plurality of frequency carriers corresponding to a different geographical area covered by the communication system (10), and wherein the current association is indicative of one of the plurality of frequency corresponding to a current geographic location of the mobile terminal (13).

9. The apparatus (20) of claim 1, wherein the means (25) for communicating the determined information (22) is operable to communicate the information (22) by means of a System Information Block (SIB) being transmitted by means of a broadcast channel of the cellular communication system (10).

10. An apparatus (40) for a mobile terminal (13) of cellular communication system (10) offering a multicast service to the mobile terminal, the apparatus (40) comprising:
means (41) for receiving, via a cell broadcast message of the cellular communication system (10), information (22) indicative of a deviation between a predetermined association (23) between a frequency carrier and the multicast service and a current association (24) between the frequency carrier and the multicast service.

11. The apparatus (40) of claim 9, wherein the means (41) for receiving the information is operable to trigger the reception of the cell broadcast message within a predetermined time interval prior to a previously communicated start time of the multicast service.

12. The apparatus (40) of claim 9, further comprising:
means (43) for selecting a cell reselection priority rule based on the received information (22) indicative of the deviation.

13. The apparatus (40) of claim 12, wherein the means (43) for selecting a cell reselection priority rule is operable to prioritize a radio cell which is operating at a frequency carrier being currently associated to the multicast service, if the received information indicates such association, and, to prioritize a radio cell according to a precept of the communication system (10).

14. A method (50) for providing information related to a multicast service to a mobile terminal (13) of a cellular communication system (10), the method comprising:
determining (51) information (22) indicative of a deviation between a predetermined association (23) between a frequency carrier and the multicast service and a current association (24) between the frequency carrier and the multicast service; and
communicating (52) the determined information (22) indicative of the deviation to the mobile terminal using a cell broadcast message.

15. A computer program having a program code for performing the method of claim 14, when the computer program is executed on a computer or processor.
